# DEMANDE DE BREVET EUROPEEN

(11) **EP 0 662 435 A1**
(43) Date de publication de la demande: **12.07.1995**
(21) Numéro de dépôt: 94402922.2
(22) Date de dépôt: 16.12.1994
(51) Int. Cl.: B65G 47/38, B65G 47/82, B07C 5/36

(54) **Dispositif de déchargement d'un produit tel qu'un fruit d'une machine de calibrage automatique**

(30) Priorité: 11.01.1994 FR 9400216
(71) Demandeur: XEDA INTERNATIONAL, F-78150 Le Chesnay (FR)
(72) Inventeur: Sardo, Alberto, F-78150 Le Chesnay (FR)
(74) Mandataire: Habasque, Etienne Joel Jean-François

(57) **Abrégé**

Ce dispositif de déchargement d'un produit tel qu'un fruit d'une machine de calibrage automatique, du type comportant un éjecteur (1), déplaçable entre une position escamotée et une position active d'éjection par pivotement autour d'un axe d'articulation (3), sous la commande de moyens d'activation (4) et comportant une première portion (5) adaptée pour coopérer avec le produit (2) pour son éjection de la machine et une seconde portion (6) adaptée pour coopérer avec les moyens d'activation (4) pour le pivotement de l'éjecteur, est caractérisé en ce que les première et seconde portions (5,6) de l'éjecteur (1) sont articulées l'une sur l'autre (en 7) et reliées par des moyens élastiques d'accouplement(8).

## Description

La présente invention concerne un dispositif de déchargement d'un produit tel qu'un fruit d'une machine de calibrage automatique.

On connaît déjà dans l'état de la technique, un certain nombre de machines de calibrage automatique pour ce type de produits.

On trouvera des exemples de telles machines dans les documents FR-A-2 680 359 au nom de MATERIEL POUR L'ARBORICULTURE FRUITIERE - MAF S.A., EP-A-0 345 036 au nom de WARKENTIN et WO-A-89/08 510 au nom de HEIBERT.

Ces machines de calibrage comprennent de manière générale un transporteur de fruits adapté pour faire passer successivement les fruits dans une station de pesage raccordée par exemple à un ordinateur de lecture du poids des fruits et de pilotage de dispositifs de déchargement de ces fruits de la machine en fonction de leur poids.

Les dispositifs de déchargement décrits dans les documents antérieurs mentionnés précédemment comportent chacun un éjecteur déplaçable entre une position escamotée et une position active d'éjection du produit, par pivotement autour d'un axe d'articulation sous la commande de moyens d'activation.

Ces moyens d'activation sont par exemple constitués par un électro-aimant ou autre.

Par ailleurs, l'éjecteur comporte une première portion adaptée pour coopérer avec le fruit pour son éjection de la machine et une seconde portion adaptée pour coopérer avec les moyens d'activation pour le pivotement de l'éjecteur entre ses deux positions.

Il a été constaté un certain nombre d'inconvénients résultant de l'utilisation de tels dispositifs de déchargement.

En effet, la puissance des moyens d'activation doit être relativement importante et le déplacement de l'éjecteur entre sa position escamotée et sa position active provoque un impact mécanique sur le fruit qui peut se traduire par des dégradations de celui-ci et des dégats mécaniques sur la machine.

Le but de l'invention est donc de résoudre ces problèmes en proposant un dispositif de déchargement qui soit simple, fiable et qui n'engendre pas d'impact mécanique risquant de détériorer le produit ou la machine de calibrage.

A cet effet, l'invention a pour objet un dispositif de déchargement d'un produit tel qu'un fruit d'une machine de calibrage automatique, du type comportant un éjecteur déplaçable entre une position escamotée et une position active d'éjection par pivotement autour d'un axe d'articulation, sous la commande de moyens d'activation et comportant une première portion adaptée pour coopérer avec le produit pour son éjection de la machine et une seconde portion adaptée pour coopérer avec les moyens d'activation pour le pivotement de l'éjecteur, caractérisé en ce que les première et seconde portions de l'éjecteur sont articulées l'une sur l'autre et reliées par des moyens élastiques d'accouplement.

L'invention sera mieux comprise à la lecture de la description qui va suivre, donnée uniquement à titre d'exemple et faite en se référant aux dessins annexés, sur lesquels :
- la Fig.1 représente une vue de côté illustrant un mode de réalisation d'un éjecteur entrant dans la constitution d'un dispositif de déchargement selon l'invention, en position escamotée; et
- la Fig.2 représente une vue de côté d'un éjecteur entrant dans la constitution d'un dispositif de déchargement selon l'invention, en position active.

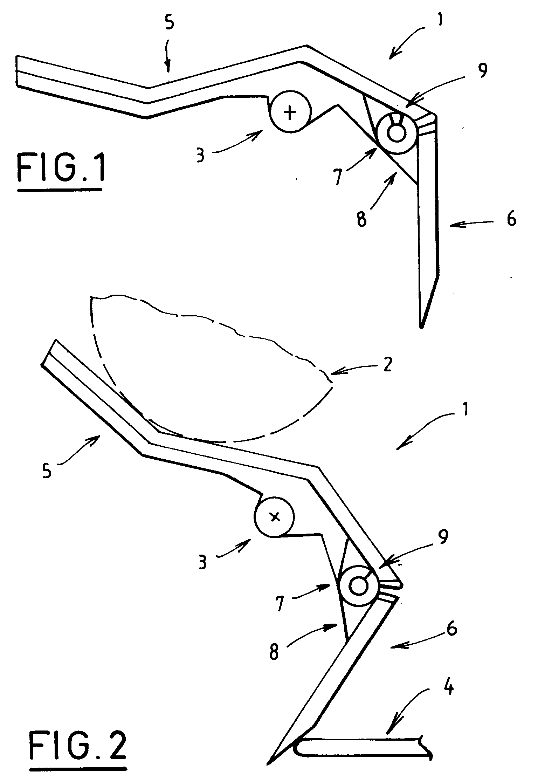

Ainsi qu'on peut le voir sur ces figures, qui représentent des vues de côté d'un dispositif de déchargement d'un produit tel qu'un fruit d'une machine de calibrage automatique, telle que par exemple décrite dans les documents mentionnés précédemment ou encore dans la demande de brevet français n° 93 11 974 du 7 octobre 1993 déposée par la Demanderesse, ce dispositif comporte par exemple un éjecteur désigné par la référence générale 1 sur ces figures 1 et 2, déplaçable entre une position escamotée représentée sur la figure 1 et une position active représentée sur la figure 2, d'éjection du produit désigné par la référence générale 2, de la machine de calibrage automatique.

Ce déplacement de l'éjecteur 1 entre sa position escamotée et sa position active, est obtenu par pivotement de celui-ci autour d'un axe d'articulation 3 sous la commande de moyens d'activation, par exemple à électroaimant, dont un doigt 4 est représenté sur la figure 2 et pilotés par exemple par un ordinateur relié à une station de pesage des fruits comme cela est décrit dans les documents mentionnés précédemment.

De manière classique, l'éjecteur entrant dans la constitution du dispositif de déchargement selon l'invention, comporte une première portion désignée par la référence générale 5 et adaptée pour coopérer avec le fruit, pour l'éjection de celui-ci de la machine et une seconde portion désignée par la référence générale 6 et adaptée pour coopérer avec les moyens d'activation 4, pour le pivotement de l'éjecteur autour de son axe d'articulation 3, entre sa position escamotée et sa position active.

Alors que dans l'état de la technique, les première et seconde portions de l'éjecteur 5 et 6 étaient réalisées d'une seule pièce, dans le dispositif de déchargement selon l'invention, les première et seconde portions 5 et 6 de l'éjecteur sont articulées l'une sur l'autre au niveau de moyens d'articulation 7 et sont reliées l'une à l'autre par des moyens élastiques d'accouplement 8 constitués par exemple par un ressort disposé autour des moyens d'articulation des deux portions de l'éjecteur l'une sur l'autre.

Bien entendu, des moyens de limitation du débattement angulaire des deux portions de l'éjecteur l'une par rapport à l'autre, constitués par exemple par des butées complémentaires 9 des moyens d'articulation de ces portions, peuvent être envisagés pour faciliter l'éjection du produit.

En effet, la première phase de fonctionnement de l'éjecteur lors de son déplacement vers sa position active est alors une phase de compression du ressort permettant d'amortir l'impact de l'éjecteur sur le fruit, jusqu'au moment où les butées complémentaires 9 viennent en appui l'une sur l'autre pour assurer l'éjection du fruit lors d'une seconde phase de fonctionnement.

Des moyens élastiques autres qu'un ressort peuvent également être envisagés.

On conçoit alors que la structure de l'éjecteur entrant dans la constitution du dispositif de déchargement selon l'invention présente un certain nombre d'avantages par rapport aux éjecteurs connus dans l'état de la technique.

En effet, le fait de prévoir des moyens d'articulation entre les deux portions de l'éjecteur associés à des moyens élastiques d'accouplement, permet de réduire l'impact de l'éjecteur sur le fruit lors du déplacement de celui-ci entre sa position escamotée et sa position active, ce qui permet de réduire les risques de dégradation des produits surtout si ceux-ci sont constitués par des fruits fragiles.

Par ailleurs, ceci permet également de limiter les impacts mécaniques sur le reste de la structure de la machine en amortissant les effets de chocs sur les éjecteurs lors du déclenchement des moyens d'activation pour l'éjection des produits de la machine de calibrage.

## Revendications

1. Dispositif de déchargement d'un produit tel qu'un fruit d'une machine de calibrage automatique, du type comportant un éjecteur (1), déplaçable entre une position escamotée et une position active d'éjection par pivotement autour d'un axe d'articulation (3), sous la commande de moyens d'activation (4) et comportant une première portion (5) adaptée pour coopérer avec le produit (2) pour son éjection de la machine et une seconde portion (6) adaptée pour coopérer avec les moyens d'activation (4) pour le pivotement de l'éjecteur, caractérisé en ce que les première et seconde portions (5,6) de l'éjecteur (1) sont articulées l'une sur l'autre (en 7) et reliées par des moyens élastiques d'accouplement (8).

2. Dispositif selon la revendication 1, caractérisé en ce que les moyens élastiques comprennent un ressort (8) disposé autour des moyens d'articulation (7) des première et seconde portions de l'éjecteur l'une sur l'autre.

3. Dispositif selon l'une quelconque des revendications précédentes, caractérisé en ce qu'il comporte des moyens (9) de limitation du débattement angulaire des deux portions de l'éjecteur l'une par rapport à l'autre.
